# EUROPEAN PATENT APPLICATION

(11) **EP 4 814 450 A1**
(43) Date of publication of application: **30.09.2026**
(21) Application number: 25166759.8
(22) Date of filing: 27.03.2025
(51) Int. Cl.: G01H 9/00, G01V 1/22

(54) **ACOUSTIC SENSING METHOD**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

There is herein described a method of sensing, the method comprising performing an optical sensing operation on an optical fibre, wherein, if the optical sensing operation indicates the presence of a disturbance in the vicinity of the optical fibre, the method further comprises performing a distributed acoustic sensing operation on the optical fibre.

## Description

It is desirable to identify the location of acoustic or physical disturbances on optical fibres in telecomms networks caused by vehicle movements, dig-ups, water leaks etc. Such disturbances can be detected using Distributed Acoustic Sensing (DAS). In a known arrangement, a DAS sensor is connected to each fibre in a bundle via a switch, such that the DAS unit is connected to one fibre at a given time. The DAS unit transmits a pulsed optical signal along the fibre. The optical pulses are backscattered from the particles of the fibre. Acoustic/physical disturbances at a location on the fibre cause a variance (e.g. in phase or amplitude) of the signal that is backscattered from that location. The DAS unit monitors the backscattered signal for such a variance signal and uses it to calculate the time of flight of the signal. It uses the calculated time of flight to determine the location. The switch then connects the DAS sensor to the next fibre in the bundle and the process repeats.

As the DAS unit can only connect to one fibre at a time, transient disturbances occurring on fibres not currently being monitored go undetected. Using a dedicated DAS unit for each fibre would be expensive.

It would be desirable to overcome and/or substantially mitigate some or all of the above-mentioned and/or other disadvantages of the prior art.

According to a first aspect of the invention there is provided a method of sensing, the method comprising performing an optical sensing operation on an optical fibre, wherein, if the optical sensing operation indicates the presence of a disturbance in the vicinity of the optical fibre, the method further comprises performing a distributed acoustic sensing operation on the optical fibre.

The optical fibre may be part of telecommunications network. The optical fibre may be located in an underground duct.

The distributed acoustic sensing operation on the optical fibre may comprise connecting a distributed acoustic sensing unit to the optical fibre via an optical switch. In response to the optical sensing operation indicating the presence of a disturbance in the vicinity of the optical fibre, a software controller may instruct the optical switch to connect the distributed acoustic sensing unit to the optical fibre.

The distributed acoustic sensing operation may comprise performing Optical Time Domain Reflectometry on the optical fibre, which may comprise determining a round trip duration of a plurality of optical pulses that are transmitted into the optical fibre and may comprise determining a location of the disturbance. The method may further comprise sending an instruction to take remedial action at the determined location of the disturbance. The disturbance may be an acoustic vibration or a physical strain and may be caused by roadworks or a water leak in the vicinity of the optical fibre.

The method may further comprise performing a distributed acoustic sensing operation on each of a plurality of further optical fibres. This may comprise connecting the distributed acoustic sensing unit to each of the plurality of further optical fibres in turn via the optical switch and performing a distributed acoustic sensing operation on each in turn.

The distributed acoustic sensing operation may comprise using the optical switch to disconnect the distributed acoustic sensing unit from one of the plurality of further fibres and connecting it to the optical fibre. This may be performed under control of a software controller. After performing the distributed acoustic sensing operation on the optical fibre method may comprise using the optical switch to disconnect the distributed acoustic sensing unit from the optical fibre and re-connect the distributed acoustic sensing unit to the one of the plurality of further fibres to which it was connected and to continue performing distributed acoustic sensing thereupon. This may be performed under control of the software controller.

The optical sensing operation may be performed by an optical detector which may be a data signal detector and may comprise a polarimeter. The optical sensing operation may comprise the optical detector monitoring for a change in a state of polarisation of an optical signal in the optical fibre. The optical detector may sample the optical signal at a frequency of 100/s to 1000/s or 300/s to 500/s or 400/s. Indicating the presence of a disturbance in the vicinity of the optical fibre may comprise outputting an indication of the presence of the disturbance from the optical detector to the software controller. The optical signal may be transmitted to the optical detector by a data signal transmitter which may be located in an exchange. The optical signal may be coherent and may be a data signal.

The method may further comprise performing an optical sensing operation on the plurality of further optical fibres. The optical sensing operation may comprise detecting a change in a state of polarisation of a respective optical data signal in the plurality of further optical fibres. The step of detecting a change in a state of polarisation may be performed by respective optical detectors which may be a data signal detectors and may be connected to the plurality of further optical fibres. The optical signals may be transmitted by respective data signal transmitters and may be coherent signals.

An embodiment of the invention will now be described in detail, for illustration only, with reference to the appended drawings, in which:
Fig 1 is a schematic view of an arrangement according to the prior art;
Fig 2 is a schematic view of an arrangement according to an embodiment of the invention.

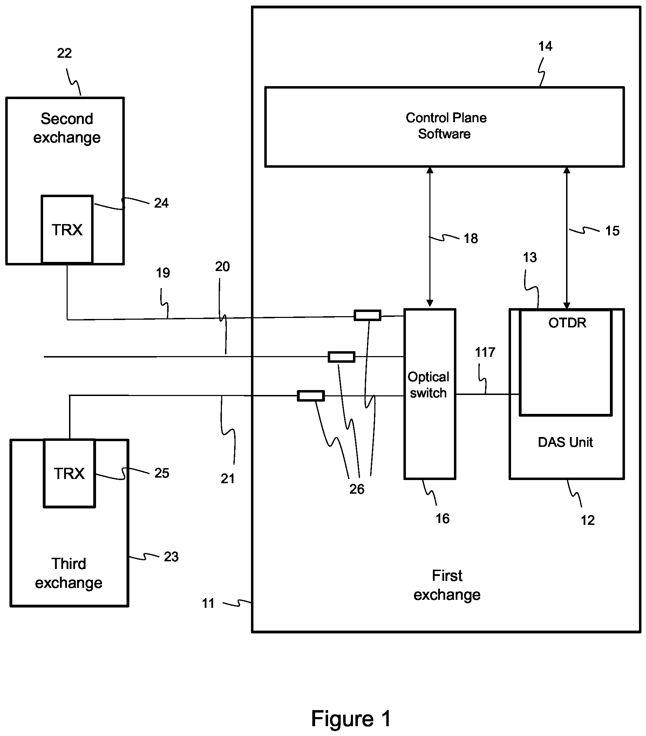

Distributed Acoustic Sensing (DAS) can be used to determine the location of leaks, breakages or other events that occur in the vicinity of an optical fibre in a telecomms network. It is known to use Optical Time Domain Reflectometry for this purpose. A known arrangement is shown at Fig 1. Fig 1 shows a first exchange 11 in a telecomms network. The first exchange 11 is connected to optical fibres 19, 20, 21. For clarity only these three fibres are shown but in reality there will be many more. The fibres extend underground through an urban area. Fibre 19 connects to a transceiver 24 in a second exchange 22. Fibre 21 connects to a transceiver 25 in a third exchange 23. Fibre 20 connects to a transceiver in a fourth exchange (not shown).

In normal network operation, transceivers 24 and 25 transmit data signals over fibre 19 and 21 respectively where they are detected at detectors 26. The data signals are coherent and are data signals being supplied to customer premises equipment (not shown).

First exchange 11 contains a DAS unit 12 comprising an Optical Time Domain Reflectometer (OTDR) 13. In use, an optical pulse is transmitted by OTDR 13 into optical fibre 17 and to optical switch 16. Optical switch 16 is connected to optical fibre 19. The time of transmission is recorded. The pulse is scattered at any location along fibre 19 that is experiencing a disturbance. This disturbance may be caused by a water leak, roadworks or some other event that has occurred in the vicinity of the fibre and causes acoustic vibrations or a physical strain in the particles in the fibre. The remote end of fibre 19 is connected to a second exchange 22.

These scattered signals return to the first exchange, are detected by the OTDR 13, and the arrival time is recorded. The difference between the transmission time and the arrival time is determined. This is known as the round-trip delay (RTD) of the pulse. As the speed of light is known, the RTD can be used to determine the location along the fibre that the scattering event took place. In this way, any parts of the fibre that are experiencing a disturbance can be located. Remedial action can be taken if a disturbance is identified.

Having performed this sensing process on fibre 19, control software 14 instructs optical switch 16 to disconnect from optical fibre 19 and to connect to optical fibre 20. The distributed acoustic sensing process described above in relation to fibre 19 is then carried out in relation to fibre 20. Once complete, the control software 14 instructs optical switch 16 to connect to a further fibre and the process repeats. Once DAS has been performed on all the fibres (only three fibres are shown in Fig 1 for clarity, although there will be many more), the switch 16 connects the DAS unit to the first fibre 19 and the entire process repeats.

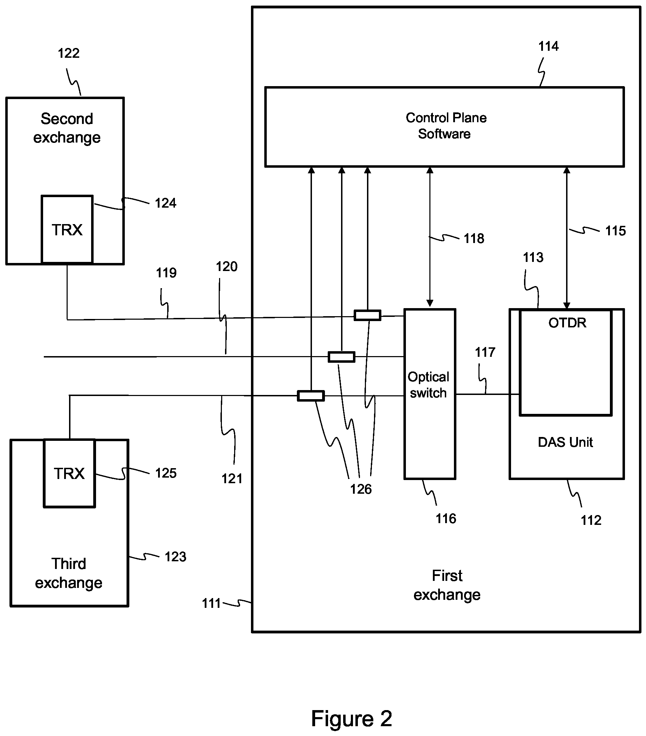

Fig 2 shows an arrangement according to an embodiment of the invention. Features in common with Fig 1 are given the same reference numerals plus 100. Fig 2 shows a first exchange 111 in a telecomms network. The first exchange 111 is connected to optical fibres 119, 120, 121. For clarity only these three fibres are shown but in reality there will be many more. The fibres extend underground through an urban area. Fibre 119 connects to a transceiver 124 in a second exchange 122. Fibre 121 connects to a transceiver 125 in a third exchange 123. Fibre 120 connects to a transceiver in a fourth exchange (not shown).

In normal network operation, transceivers 124 and 125 transmit data signals over fibre 119 and 121 respectively where they are detected at detectors 126. The data signals are coherent and are being supplied to customer premises equipment (not shown).

First exchange 111 contains a DAS unit 112 that in turn contains an Optical Time Domain Reflectometer (OTDR) 113. In use, an optical pulse is transmitted by OTDR 113 into optical fibre 117 and to optical switch 116. Optical switch 116 is connected to optical fibre 119. The time of transmission is recorded. The pulse is scattered at any location along fibre 119 that is experiencing disturbance. This disturbance may be caused by a water leak, roadworks or some other event that has occurred in the vicinity of the fibre. The remote end of fibre 119 is connected to a second exchange 122.

These scattered signals return to the head end, are detected by the OTDR 113, and the arrival time is recorded. The difference between the transmission time and the arrival time is determined. This is known as the round-trip delay (RTD) of the pulse. As the speed of light is known, the RTD can be used to determine the location along the fibre that the scattering event took place. In this way, any parts of the fibre that are experiencing disturbance can be located. Remedial action can be taken if a disturbance is detected.

As in Fig 1, having performed this sensing process on fibre 119, control software 114 instructs optical switch 116 to disconnect from optical fibre 119 and to connect to optical fibre 120. The distributed acoustic sensing process described above in relation to fibre 119 is then carried out in relation to fibre 120. Once complete, the control software 114 instructs optical switch 116 to connect to a further fibre and the process repeats. Once DAS has been performed on all the fibres (only 3 fibres are shown in Fig 2 for clarity), the switch 116 connects the DAS unit to the first fibre 119 and the entire process repeats.

As noted above, each of fibres 119, 120 and 121 is provided with an optical detector 126, which detect data signals arriving on the fibres as part of the normal operation of the network. In the present invention, the optical detectors 126 are also used to measure the SOP (State of Polarisation) of the incoming data signals. An SOP is a measurement of the polarisation of the incoming the optical wave and is inherent in any laser transmission. Any acoustic/physical disturbances occurring on the fibre change the SOP of optical signals passing through the fibre. Measuring the SOP therefore indicates the presence of a disturbance. If one of the detectors 126 detect such a disturbance, the SOP detector 126 sends an indication to control software 114 which instructs the optical switch 116 to disconnect the DAS unit 112 from the fibre on which it is currently operating and connect it to the fibre experiencing the disturbance. The DAS unit 112 then performs OTDR sensing on the fibre in the manner described above and thereby determines the location of the disturbance. Remedial action can then be taken in relation to the disturbance. The control software 114 then instructs the optical switch 116 to connect the DAS unit 112 to the fibre from which it was disconnected, and the DAS unit continues to cycle through the fibres in the manner described above.

The detectors 126 perform SOP detection continuously and sample incoming optical data for SOP measurement at a rate of 400 samples per second.

## Claims

1. A method of sensing, the method comprising performing an optical sensing operation on an optical fibre, wherein, if the optical sensing operation indicates the presence of a disturbance in the vicinity of the optical fibre, the method further comprises performing a distributed acoustic sensing operation on the optical fibre.

2. A method as claimed in claim 1, wherein the optical fibre is part of a telecommunications network.

3. A method as claimed in claim 1 or claim 2, wherein the optical fibre is located in an underground duct.

4. A method as claimed in any preceding claim, wherein the distributed acoustic sensing operation comprises connecting a distributed acoustic sensing unit to the optical fibre via an optical switch.

5. A method as claimed in claim 4, wherein the optical fibre is one of a plurality of optical fibres and the method further comprises connecting the distributed acoustic sensing unit to each of the plurality of optical fibres in turn via the optical switch and performing a distributed acoustic sensing operation on each of the plurality of optical fibres in turn.

6. A method as claimed in claim 4 or claim 5, wherein the distributed acoustic sensing operation comprises using the optical switch to disconnect the distributed acoustic sensing unit from one of the plurality of further optical fibres and connect it to the optical fibre.

7. A method as claimed in claim 6, wherein the distributed acoustic sensing operation comprises using the optical switch to disconnect the distributed acoustic sensing unit from the optical fibre and re-connect it to the one of the plurality of further optical fibres and to perform distributed acoustic sensing thereupon.

8. A method as claimed in any preceding claim, wherein the distributed acoustic sensing operation comprises determining a location of the disturbance.

9. A method as claimed in claim 8, wherein the method further comprises sending an instruction to take remedial action at the determined location of the disturbance.

10. A method as claimed in any preceding claim, wherein the optical sensing operation comprises an optical data detector detecting a change in a state of polarisation of an optical signal in the optical fibre.

11. A method as claimed in claim 10, wherein the optical data detector samples the optical signal at a frequency of 300Hz to 500Hz.

12. A method as claimed in claim 10 or claim 11, wherein the optical signal is a conventional data signal.

13. A computer program comprising instructions which, when the program is executed by a computer, cause the computer to carry out the steps of any of claims 1 to 12.

14. A computer-readable carrier medium comprising the computer program of claim 13.
